# EUROPÄISCHE PATENTSCHRIFT

(11) **EP 2 794 451 B1**
(45) Veröffentlichungstag und Bekanntmachung des Hinweises auf die Patenterteilung: **01.04.2015**
(21) Anmeldenummer: 12799553.8
(22) Anmeldetag: 06.12.2012
(51) Int. Cl.: B66B 5/18

(54) **BETÄTIGER ZU AUFZUGS-BREMSE**
ACTUATOR FOR ELEVATOR BRAKE
ACTIONNEUR POUR FREIN D'ASCENSEUR

(30) Priorität: 21.12.2011 EP 11194963
(43) Veröffentlichungstag der Anmeldung: 29.10.2014
(73) Patentinhaber: Inventio AG, 6052 Hergiswil (CH)
(72) Erfinder: HUSMANN, Josef, CH-6006 Luzern (CH)
(86) Internationale Anmeldenummer: PCT/EP2012/074702
(87) Internationale Veröffentlichungsnummer: WO 2013/092239

(56) Entgegenhaltungen:
- EP-A1- 1 749 785
- WO-A1-2010/107409
- WO-A1-2012/080102
- WO-A2-2011/113753
- JP-A- 2009 227 353

## Beschreibung

Die Erfindung betrifft einen Betätiger zur Betätigung einer Aufzugs-Bremse.

Die Aufzugsanlage ist in einem Gebäude eingebaut. Sie besteht im Wesentlichen aus einer Kabine, welche über Tragmittel mit einem Gegengewicht oder mit einer zweiten Kabine verbunden ist. Mittels eines Antriebs, der wahlweise auf die Tragmittel oder direkt auf die Kabine oder das Gegengewicht einwirkt, wird die Kabine entlang von, im Wesentlichen vertikalen, Führungsschienen verfahren. Die Aufzugsanlage wird verwendet um Personen und Güter innerhalb des Gebäudes über einzelne oder mehrere Etagen hinweg zu befördern.
Die Aufzugsanlage beinhaltet Vorrichtungen um die Aufzugskabine oder auch ein Gegengewicht im Fall des Versagens des Antriebs oder der Tragmittel oder bei anderem Fehlverhalten zu sichern. Dazu sind in der Regel Aufzugs-Bremsen verwendet, welche im Bedarfsfall die Aufzugskabine oder das Gegengewicht auf den Führungsschienen abbremsen können. Diese Aufzugs-Bremsen werden zunehmend von elektromechanischen Betätiger betätigt.

Aus den internationalen Anmeldungen WO2011/113753 und WO2011/113754 ist ein derartiger Betätiger bekannt, welcher ein Paar von Aufzugs-Bremsen synchron betätigen kann. Dieser Betätiger wirkt allenfalls entstehenden Schlag- und Stossbelastungen durch den Einsatz von Dämpfeinrichtungen, wie hydraulischen, pneumatischen oder magnetischen Dämpfeinrichtungen, entgegen. Damit werden Schlaggeräusche und Materialbelastungen reduziert. Unangenehm ist hierbei, dass eine Betätigungsgeschwindigkeit durch die Verwendung derartiger Dämpfeinrichtungen verlangsamt wird.

Die Erfindung bezweckt die Bereitstellung eines Betätigers der Schlag- und Stossbelastungen aufnehmen kann, ohne eine Betätigungsgeschwindigkeit negativ zu beeinflussen.

In einer Ausführung ist ein elektromechanischer Betätiger für den Anbau an eine Aufzugskabine einer Aufzugsanlage vorgesehen. Der elektromechanische Betätiger ist zum Betätigen einer Bremse vorgesehen. Er beinhaltet dazu einen Kraftspeicher, eine Halteeinrichtung, eine Rückstelleinrichtung und mindestens ein Verbindungselement zum Verbinden des Betätigers mit der Bremse, bzw. der Bremseinrichtung. Die Rückstelleinrichtung dient zur Rückstellung des elektromechanischen Betätigers in eine einer Bereitschaftsstellung der Bremse entsprechenden ersten Betriebsposition. Sie ist auch vorgesehen eine Haltekraft zum Halten der Bremse in der der Bereitschaftsstellung entsprechenden ersten Betriebsposition zu übertragen. Die Rückstelleinrichtung wirkt dabei vorzugsweise zum Halten, wie auch zum Rückstellen, über die Halteeinrichtung auf den Kraftspeicher und das Verbindungselement. Der Kraftspeicher seinerseits ist derart angeordnet, dass er im Bedarfsfall, wenn die Halteeinrichtung freigegeben wird, auf das Verbindungselement einwirken kann, um die Bremse zu Betätigen und in eine entsprechende Einrückstellung zu bringen.

Vorteilhafterweise wirkt der Kraftspeicher über einen Auslösehebel auf das Verbindungselement ein. Dieser Auslösehebel wird bei einem Verbindungspunkt von einem an der Halteeinrichtung angeordneten Elektro-Haftmagnet in der Bereitschaftsstellung gehalten. Die Halteeinrichtung ist vorzugsweise auf einem Rückführhebel angeordnet und ein Drehpunkt des Rückführhebels und ein Drehpunkt des Auslösehebels sind auf einer gemeinsamen Achse angeordnet. Damit ist sichergestellt, dass ein Schwenkradius des Verbindungspunkts der Halteeinrichtung und des Auslösehebels gleich sind. Die Verbindungspunkte können somit einfach synchron zueinander bewegt werden.

Vorteilhafterweise führt das Verbindungselement zum Verbinden des Betätigers mit der Bremse über den Drehpunkt des Auslösehebels. Das Verbindungselement beinhaltet dazu eine Anschlusslasche, welche einerseits zum Drehpunkt des Auslösehebels und andererseits zu der oder den Bremsen verbunden ist.

Vorteilhafterweise beinhaltet die Rückstelleinrichtung des elektromechanischen Betätigers eine Rückstosssicherung, vorzugsweise eine federbelastete Rückstosssicherung, welche die Rückstelleinrichtung von Rückstosskräften entlastet. Dies ist vorteilhaft und nützlich, da die Bremsen fallweise das Verbindungselement des elektromechanischen Betätigers zurückdrücken können. Dies kann während einem Rückstellvorgang geschehen oder es kann auch sein, dass das Verbindungselement in einer Zwischenlage positioniert ist, wenn beispielsweise eine Bremse nicht vollständig einrückt, da die Aufzugskabine schon vorher den Stillstand erreicht hat. In derartigen Fällen verhindert die Rückstosssicherung eine Überlastung oder gar Beschädigung der Rückstelleinrichtung und des gesamten Betätigers.

Vorteilhafterweise beinhaltet der Kraftspeicher einen Anschlagpuffer, welcher einen Kraftstoss beim Auftreffen des Kraftspeichers in eine Endposition reduziert. Dies ist vorteilhaft, da der Kraftspeicher eine grosse Energie gespeichert hat. Im Regelfall wird diese Energie zum Betätigen der Bremse über entsprechende Verbindungsstangen zur Bremse übertragen. In besonderen Fällen, wenn zum Beispiel noch keine Bremse eingebaut ist oder bei Manipulationen während einer Inbetriebnahme, kann diese Energie nicht übertragen werden. Der Anschlagpuffer verhindert in derartigen Fällen eine Überbeanspruchung von Material.

Vorteilhafterweise wirkt die Rückstelleinrichtung, zum Zweck des Rückstellens und des Haltens des Betätigers in der der Bereitschaftsstellung der Bremse entsprechenden ersten Betriebsposition, mittels der Rückstosssicherung auf die Halteeinrichtung ein. Die Rückstosssicherung ist ausgeführt um lediglich in eine Richtung Kraft zu übertragen. Die Rückstosssicherung der Rückstelleinrichtung stellt somit sicher, dass die Rückstelleinrichtung nicht unkontrolliert belastet wird. Sofern, wie vorgängig ausgeführt, das Verbindungselement in einer Zwischenposition ist, ist damit sichergestellt, dass die Rückstelleinrichtung nur in eine Kraftwirklinie arbeiten und Kraft übertragen kann. Abhängig von der Ausführungsart des Betätigers und der Rückstelleinrichtung kann diese Richtung ziehend oder stossend sein. Vorzugsweise ist die Rückstelleinrichtung ausgelegt um eine Zugkraft zu übertragen.

Vorteilhafterweise ist die Rückstelleinrichtung über einen Rückführschlitten zur Halteeinrichtung verbunden und dieser Rückführschlitten beinhaltet die Rückstosssicherung. Die Rückstosssicherung beinhaltet dazu beispielsweise ein Langloch, welches mit einem in der Halteeinrichtung integrierten Führungsbolzen zusammenwirkt. Eine derartige Ausführung ist günstig in der Herstellung. Weiter beinhaltet die Rückstelleinrichtung vorteilhafterweise einen Spindelantrieb mit einer Spindelmutter. Die Spindelmutter ist im Rückführschlitten angeordnet. Ein Getriebemotor treibt eine mit der Spindelmutter zusammenwirkende Rückführspindel. Damit kann der Rückführschlitten vor- und rückbewegt werden.

Vorteilhafterweise ist die Halteeinrichtung mit einer Gegenfeder verbunden, welche die Halteeinrichtung mit dem Führungsbolzen in die der ersten Richtung der Rückstosssicherung entsprechende Lage drückt. Die Rückstosssicherung ist damit eine federbelastete Rückstosssicherung. Eine Kraftwirkung der Gegenfeder im Vergleich zu einer Kraftwirkung des Kraftspeichers ist dabei klein.

Vorteilhafterweise ist der Kraftspeicher des elektromechanischen Betätigers über einen Auslösehebel zu dem Verbindungselement verbunden, Der Kraftspeicher wirkt dementsprechend über den Auslösehebel auf dieses Verbindungselement ein. Dieser Auslösehebel beinhaltet einen Verbindungspunkt. An diesem Verbindungspunkt ist der Auslösehebel von einem an der Halteeinrichtung angeordneten Elektro-Haftmagnet in der Bereitschaftsstellung gehalten. Die Halteeinrichtung ihrerseits ist auf einem Rückführhebel angeordnet. Ein Drehpunkt des Rückführhebels und ein Drehpunkt des Auslösehebels sind auf einer gemeinsamen Achse oder Welle angeordnet, so dass ein Schwenkradius des Verbindungspunkts der Halteeinrichtung und des Auslösehebels gleich sind. Dies ist vorteilhaft, da durch diese Anordnung gewährleistet ist, dass bei der Rückführung, bzw. Zurückstellung des Auslösehebels in die Bereitschaftsstellung, die Halteeinrichtung einen zum Verbindungspunkt des Auslösehebels identischen Weg durchläuft.

Vorteilhafterweise ist das Verbindungselement über den Drehpunkt des Auslösehebels geführt und das Verbindungselement beinhaltet weiter eine Anschlusslasche, welche zum Drehpunkt des Auslösehebels verbunden ist. Das Verbindungselement ist vorzugsweise eine Welle, welche beispielsweise in einem Gehäuse des Betätigers dreh- oder schwenkbar gelagert ist und auf welcher der Auslösehebel und die Anschlusslasche befestigt sind. Diese Welle bildet den Drehpunkt des Auslösehebels. Eine Verwendung einer derartigen Anschlusslasche ist vorteilhaft, da mit der geometrischen Form dieser Lasche eine Anpassung auf geforderte Betätigungswege erfolgen kann. Damit kann der Betätiger selbst belassen werden, es muss lediglich der Anschlusshebel angepasst werden.

Vorteilhafterweise beinhaltet der Kraftspeicher des elektromechanischen Betätigers, in Ergänzung zu den vorgängigen Lösungen oder auch als alternative Ausgestaltung, den Anschlagpuffer. Dazu beinhaltet der Kraftspeicher beispielsweise einen ersten Teil, einen zweiten Teil und eine erste Feder mit einer ersten Federspannkraft. Dabei ist diese erste Feder zwischen dem ersten und dem zweiten Teil gespannt. Der erste Teil und der zweite Teil sind zueinander über einen Verschiebebereich verschiebbar zusammengebaut. Der Verschiebebereich ist durch mindestens einen ersten, bzw. vorderen Anschlag oder einen zweiten, bzw. hinteren Anschlag begrenzt. Dieser zumindest eine Anschlag ist zur Sicherstellung einer minimalen ersten Federspannkraft verwendet. Der Kraftspeicher ist dementsprechend so zusammengebaut und gespannt, dass er über einen Verschiebebereich, gegen die Kraft der ersten Feder zusammengedrückt werden kann, wobei der mindestens eine Anschlag eine minimale Vorspannkraft bestimmt.
Der Aufschlagspuffer ist im ersten oder im zweiten Teil integriert. Der betreffende erste oder zweite Teil beinhaltet weiter ein erstes Teilstück und ein zweites Teilstück und der Anschlagpuffer verbindet das erste Teilstück mit dem zweiten Teilstück. Damit wird erreicht, dass eine Pufferzone eingerichtet werden kann, welche Schlagspitzen im Kraftspeicher absorbieren kann.

Vorteilhafterweise beinhaltet der vorgängige Anschlagpuffer eine Federanordnung. Diese Federanordnung ist mit einer zweiten Federspannkraft vorgespannt, welche das erste Teilstück mit dem zweiten Teilstück verbindet und zusammenhält. Die zweite Federspannkraft ist auf einen Wert grösser als die erste Federspannkraft eingestellt. Die beiden Teilstücke sind demzufolge mittels der Federanordnung so zusammengehalten, dass sie erst bei grösseren dynamischen Kräften, wie sie beim Auftreffen des Kraftspeichers an einen Anschlag auftreten, einfedern. Dies ist vorteilhaft, weil der Kraftspeicher im normalen Betätigungsvorgang schnell ansprechen kann, da keine dämpfenden Teile wirksam sind. Lediglich bei einem Auftreffen des Kraftspeichers an seinen Endanschlag wird ein Schlag wirkungsvoll absorbiert.

Vorteilhafterweise beinhaltet eines der beiden ersten oder zweiten Teilstücke eine Gewindeplatte und das andere der beiden Teilstücke beinhaltet eine Prallplatte. Die Federanordnung spannt mittels einer Spannschraube die Prallplatte zur Gewindeplatte vor. Dies ermöglicht ein kostengünstiges Zusammenfügen der beiden Teile und die Vorspannkraft der Federanordnung ist damit einfach einstellbar. Die Federanordnung beinhaltet vorzugsweise eine Tellerfedersäule. Dies ist eine Schichtung von einzelnen Tellerfedern. Damit lassen sich hohe Vorspannkräfte erzielen.

Vorteilhafterweise ist der erste Teil zum Verbindungselement verbunden und der zweite Teil ist entsprechend zum Gehäuse des Betätigers, bzw. zu einem Betätigerträger, verbunden. Der erste Teil beinhaltet eine Führung für den zweiten Teil, so dass der zweite Teil geführt im ersten Teil verschiebbar ist.

Vorteilhafterweise beinhaltet der erste Teil ein weiteres Langloch, welches mit einem Führungsstift des zweiten Teils zusammenwirkt. Dieses weitere Langloch, zusammen mit dem Führungsstift, bestimmt den ersten und zweiten, bzw. vorderen und hinteren, Anschlag, welche Anschläge den Verschiebebereich definieren. Damit kann der Kraftspeicher selbst im Rahmen einer Vormontage einfach zusammengebaut werden. Vorteilhafterweise sind der erste und der zweite Teil schwenkbar zum Verbindungselement oder zum Gehäuse des Betätigers, bzw. zu einem Betätigerträger, verbunden.

Der Kraftspeicher folgt damit einer Bewegung des Verbindungselements, bzw. eines zum Verbindungselement führenden Auslösehebels, ideal. Er kann erforderliche Schwenkbewegungen ohne Behinderung mitmachen.

Im gesamten ist ein elektromechanischer Betätiger mit den vorgängig beschriebenen Merkmalen geeignet um mögliche Stossbelastungen, welche sich beim Rückstellen des Betätigers, aber auch beim Auslösen des Betätigers ergeben, wirksam zu absorbieren und damit einer Beschädigung des Betätigers vorzubeugen.

Im Folgenden ist eine beispielhafte Ausführung mit vorteilhaften Ausgestaltungen anhand von Beispielen und schematischen Ausführungen erläutert.

Es zeigen:
- Fig. 1: eine schematische Ansicht einer Aufzugsanlage in der Seitenansicht,
- Fig. 2: eine schematische Ansicht der Aufzugsanlage im Querschnitt,
- Fig. 3: eine Anordnung mit zwei Aufzug-Bremsen und Betätiger,
- Fig. 4: einen Betätiger in einer perspektivischer Ansicht ohne Abdeckung,
- Fig. 5: eine Draufsicht eines Betätigers in einer Bereitschaftsstellung,
- Fig. 6: eine Draufsicht eines Betätigers in einer betätigten Stellung,
- Fig. 7: eine Draufsicht eines Betätigers in einer Rückholsituation,
- Fig. 8: eine Funktionsansicht eines Betätigers in Rückstosssicherung,
- Fig. 9: eine Draufsicht eines Betätigers in gepufferter Stellung,
- Fig. 10: eine Detailansicht eines Kraftspeichers in ungepufferter Stellung, und
- Fig. 11: eine Detailansicht eines Kraftspeichers in gepufferter Stellung.

In den Figuren sind für gleichwirkende Teile über alle Figuren hinweg dieselben Bezugszeichen verwendet.

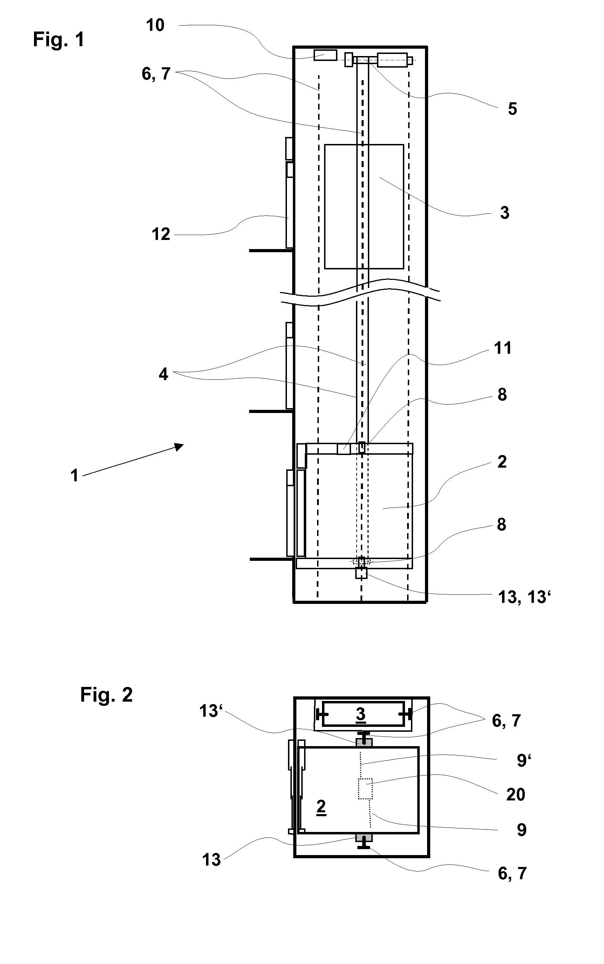

Fig. 1 zeigt eine Aufzugsanlage 1 in einer Gesamtschau. Die Aufzugsanlage 1 ist in einem Gebäude eingebaut und sie dient dem Transport von Personen oder Gütern innerhalb des Gebäudes. Die Aufzugsanlage beinhaltet eine Aufzugskabine 2, welche sich entlang von Führungsschienen 6 auf- und abwärts bewegen kann. Die Aufzugskabine 2 ist dazu mit Führungsschuhen 8 versehen, welche die Aufzugskabine möglichst genau einem vorgegebenen Fahrweg entlang führt. Die Aufzugskabine 2 ist vom Gebäude über Schachttüren 12 zugänglich. Ein Antrieb 5 dient zum Antreiben und Halten der Aufzugskabine 2. Der Antrieb 5 ist beispielsweise im oberen Bereich des Gebäudes angeordnet und die Kabine 2 hängt mit Tragmitteln 4, beispielsweise Tragseile oder Tragriemen, am Antrieb 5. Die Tragmittel 4 sind über den Antrieb 5 weiter zu einem Gegengewicht 3 geführt. Das Gegengewicht gleicht einen Massenanteil der Aufzugskabine 2 aus, so dass der Antrieb 5 zur Hauptsache lediglich ein Ungleichgewicht zwischen Kabine 2 und Gegengewicht 3 ausgleichen muss. Der Antrieb 5 ist im Beispiel im oberen Bereich des Gebäudes angeordnet. Er könnte selbstverständlich auch an einem anderen Ort im Gebäude, oder im Bereich der Kabine 2 oder des Gegengewichts 3 angeordnet sein.

Die Aufzugsanlage 1 wird von einer Aufzugssteuerung 10 gesteuert. Die Aufzugssteuerung 10 nimmt Benutzeranfragen entgegen, optimiert den Betriebsablauf der Aufzugsanlage und steuert den Antrieb 5.

Die Aufzugskabine 2 und im Bedarfsfall auch das Gegengewicht 3 ist weiter mit mindestens einer Bremse ausgerüstet, welche geeignet ist um die Aufzugskabine 2 bei einer unerwarteten Bewegung oder bei Übergeschwindigkeit zu sichern und/oder zu verzögern. Im Beispiel sind zwei baugleiche Bremsen 13, 13' beidseitig vom Fahrkörper 2, 3 an demselben angebaut. Die Aufzugs-Bremsen 13, 13' sind im Beispiel unterhalb der Kabine 2 angeordnet und sie sind von einem zwischen den beiden Bremsen 13, 13' angeordneten Betätiger 20 betätigbar. Der Betätiger ist elektrisch von einer Brems-Steuerung 11 angesteuert. Diese Brems-Steuerung 11 beinhaltet vorzugsweise auch einen elektronischen Geschwindigkeits- oder Fahrkurvenbegrenzer, der Fahrbewegungen der Aufzugskabine 2 überwacht. Ein mechanischer Geschwindigkeitsbegrenzer, wie er üblicherweise verwendet ist, kann deswegen entfallen.

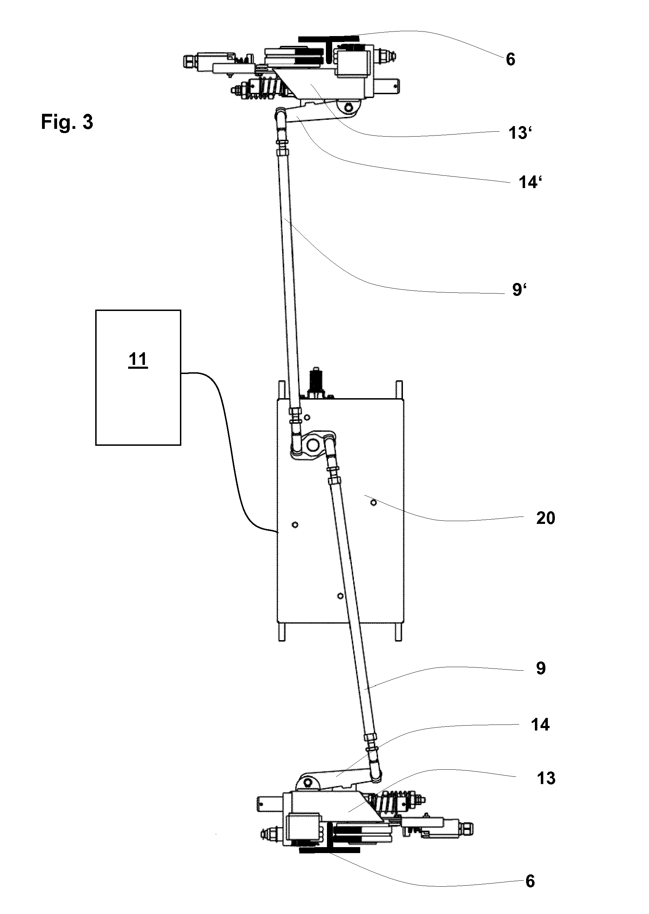

Fig. 2 zeigt die Aufzugsanlage von Fig. 1 in einer schematischen Draufsicht. Das Bremssystem beinhaltet die zwei Aufzugs-Bremsen 13, 13'. Die zwei Aufzugs-Bremsen 13, 13' sind, wie in Fig. 3 detaillierter dargestellt, über Zusteller 14, 14' und Verbindungsstangen 9, 9' zum Betätiger 20 gekoppelt, so dass die beiden Aufzugs-Bremsen 13, 13' zwangsläufig miteinander betätigt werden können. Damit kann ein unbeabsichtigtes einseitiges Bremsen vermieden werden und die beiden Aufzugs-Bremsen 13, 13' sind über die gemeinsame Betätigungseinheit 20, welche von der Brems-Steuerung 11 angesteuert wird, einfach betätigbar. Die beiden Aufzugs-Bremsen 13, 13' sind vorzugsweise baugleich oder spiegelsymmetrisch ausgeführt und sie wirken auf die zu beiden Seiten der Kabine 2 angeordneten Bremsschienen 7 ein. In den Detailausführungen zur Aufzugs-Bremse wird im Folgenden nur noch von einer Aufzugs-Bremse 13 gesprochen, wobei stets die links- und rechtsseitige Aufzugs-Bremse verstanden ist. Die Bremsschienen 7 sind im Beispiel identisch zu den Führungsschienen 6.

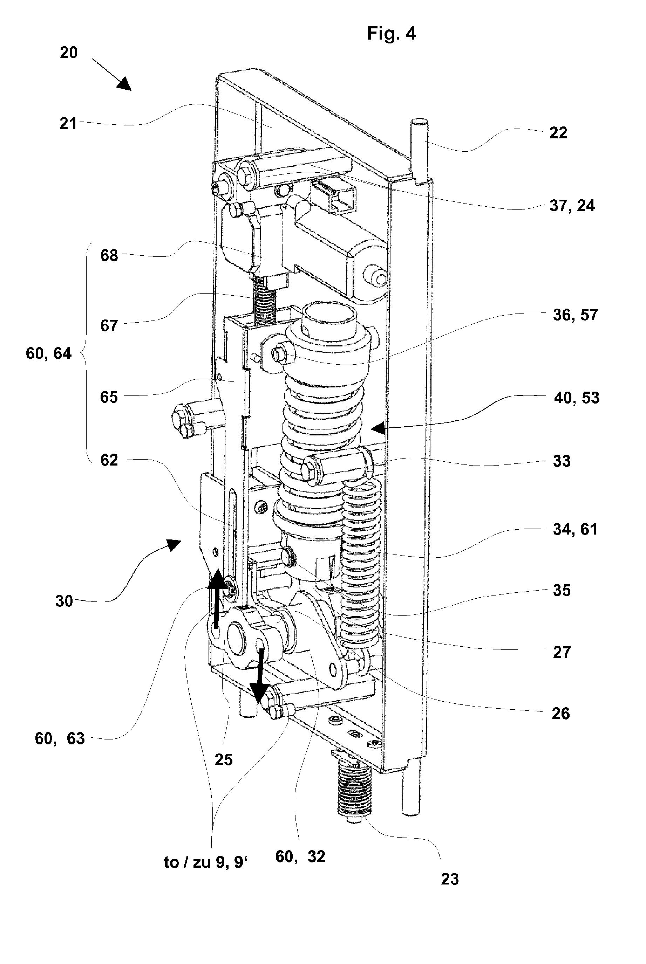

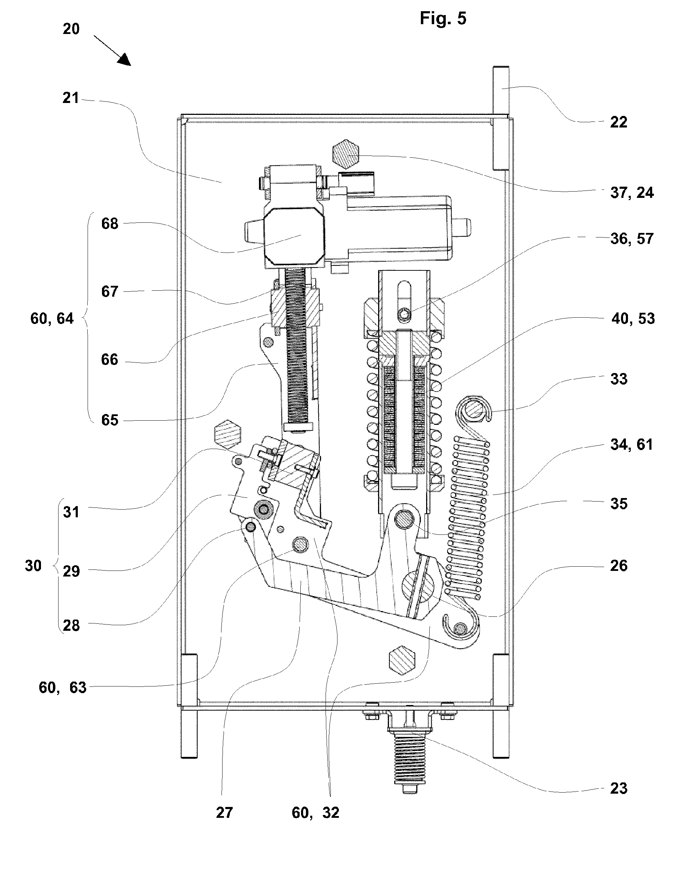

Fig. 4 und 5 zeigen einen Betätiger 20 in der sogenannten Bereitschaftsstellung. Als Bereitschaftsstellung ist verstanden, dass der Betätiger die Bremsen in offener Stellung hält, so dass der Fahrkörper, bzw. die Kabine oder das Gegengewicht verfahren werden können. Der Betätiger ist auf einem Betätigerträger 21 aufgebaut oder er beinhaltet den Betätigerträger 21. Auf dem Betätigerträger 21 sind vorzugsweise Hilfsmittel 37 angeordnet, welche unter anderem vorbereitet sind um einen Deckel 24 (in den Abbildungen nicht dargestellt) zu befestigen. Der Betätigerträger 21 ist mit Lagerungselementen 22 versehen, welche erlauben den Betätiger 20 am Fahrkörper derart anzuordnen, dass er mit seitlicher Bewegungsfreiheit versehen ist. Damit kann der Betätiger 20 zwischen zwei Bremsen 13, 13' angeordnet werden und kann im Bedarfsfall Zusteller 14, 14' der Bremsen gegeneinander ziehen (oder voneinander wegstossen). Die Lagerelemente 22, beispielsweise Gleitbolzen ermöglichen den seitlichen Ausgleich. Ein Betätigerhalter 23 begrenzt dabei den seitlichen Gleitweg.

Auf dem Betätigerträger 21 ist ein Auslösehebel 27 angeordnet. Der Auslösehebel 27 ist um einen durch ein Verbindungselement 26 bestimmten Drehpunkt verschwenkbar. Über das Verbindungselement 26 ist beispielsweise eine Anschlusslasche 25 zum Auslösehebel 27 verbunden und die Anschlusslasche 25 ermöglicht die Verbindung zu den Bremsen 13, 13' über entsprechende Verbindungsstangen 9, 9'. Ein Schwenken des Auslösehebels 27 bewirkt somit ein Verschwenken der Anschlusslasche 25 und bewirkt dadurch ein Zusammenziehen oder ein Auseinanderdrücken der entsprechenden Verbindungsstangen 9, 9'. Das Verbindungselement 26 ist im Beispiel eine Welle, welche im Betätigerträger 21 des Betätigers dreh- oder schwenkbar gelagert ist und auf welcher der Auslösehebel 27 und die Anschlusslasche 25 befestigt sind. Diese Welle bildet den Drehpunkt des Auslösehebels 27. An einem Ende des Auslösehebels 27 greift ein Kraftspeicher 40 an, der über einen vorderen Anschlusspunkt 35 Kraft in den Auslösehebel 27 einleiten kann. Diese Kraft wird über einen hinteren Anschlusspunkt 36 in den Betätigerträger 21 eingeleitet. Der Kraftspeicher 40 versucht den Auslösehebel 27 zu schwenken. Dieses wird in der Bereitschaftsstellung des Betätigers 20 durch eine Halteeinrichtung 30 verhindert, welche an einem andern Ende des Auslösehebels 27 angreift und den Auslösehebel 27 gegen die Kraft des Kraftspeichers 40 zurückhält. Die Halteeinrichtung 30 besteht aus einer Klinke 29, welche einen Verbindungspunkt 28 des Auslösehebels 27 festhält. Die Klinke 29 ist von einem Elektromagneten 31 in der Bereitschaftsstellung gehalten. (Fig. 4 und 5)

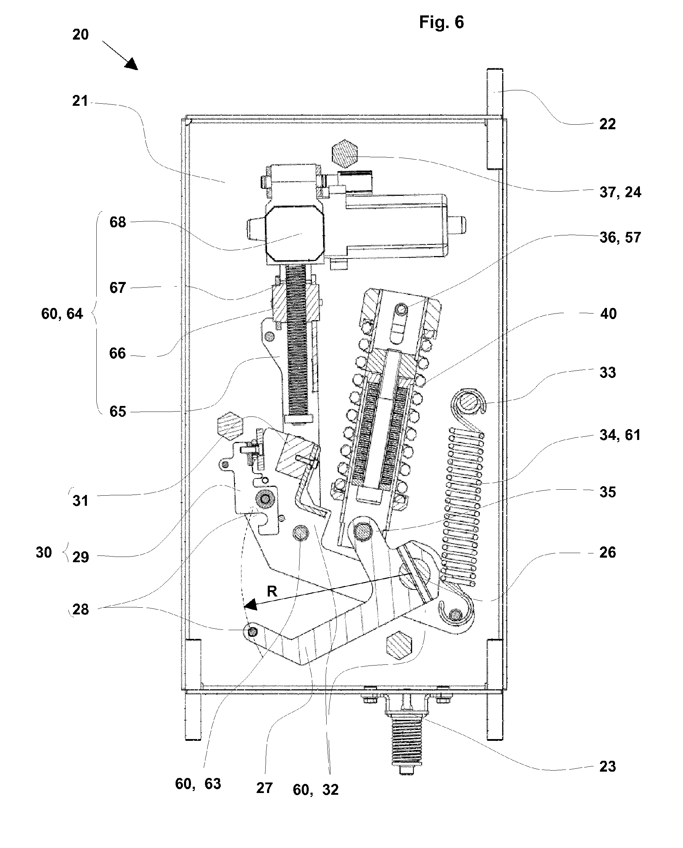

Im Bedarfsfall schaltet die Bremssteuerung 11 den Elektromagneten 31 stromlos, wie es in Fig. 6 ersichtlich ist. Dadurch kann die Klinke 29 vom Verbindungspunkt 28, oder von allfälligen Federelementen weggedrückt werden und der Kraftspeicher 40 kann den Auslösehebel und natürlich das verbundene Verbindungselement 26 und Anschlusslasche 25, usw. entsprechend betätigen.

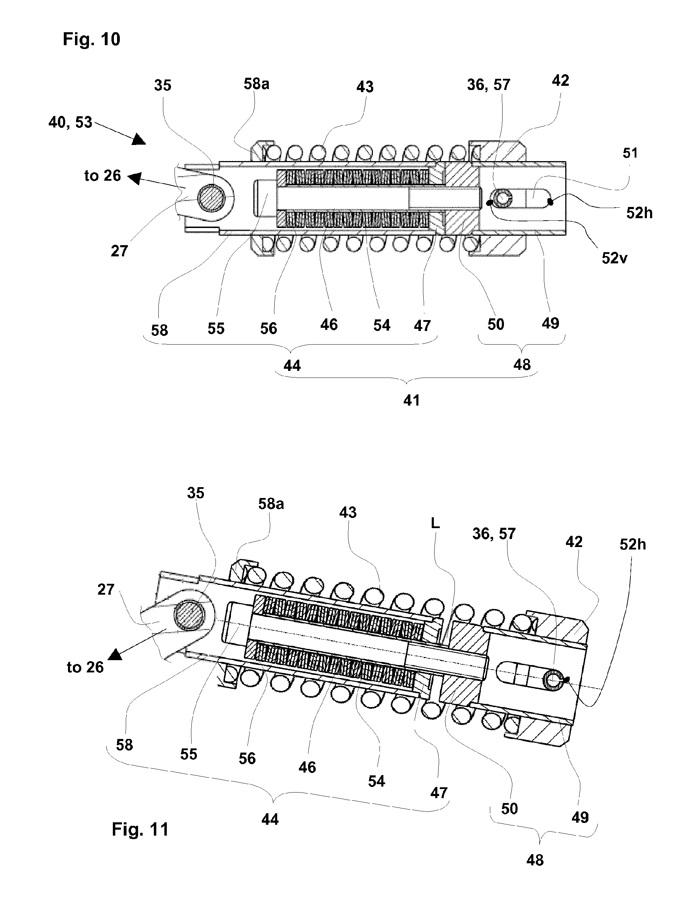

Der Kraftspeicher 40 beinhaltet einen Anschlagpuffer 53. Der Anschlagpuffer 53 hat den Zweck einen allfälligen Stoss aufzufangen oder abzufedern, wenn der Kraftspeicher an seinen Endanschlag, bzw. den hinteren Anschlag gelangt. Der Aufbau eines beispielhaften Kraftspeichers 40 mit Anschlagpuffer ist in den Fig. 10 und 11 dargestellt.

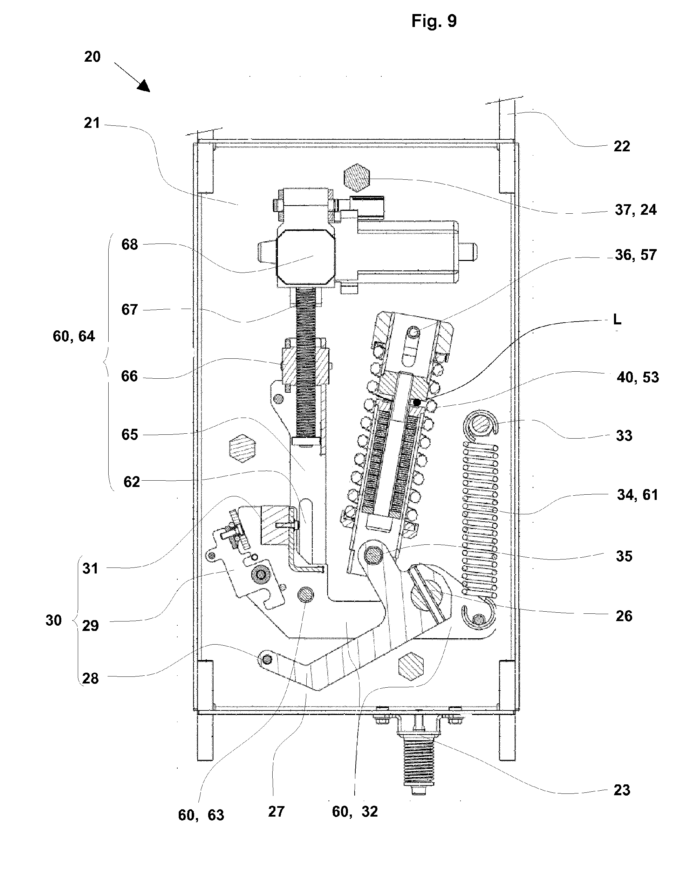

Der Kraftspeicher 40 besteht im dargestellten Beispiel aus einem ersten Teil 41 und einem zweiten Teil 42. Diese beiden Teile 41, 42 werden von einer ersten Feder 43 auseinander gepresst. Die Feder 43 generiert die eigentliche Kraft des Kraftspeichers 40 zur Betätigung der Bremsen. Die beiden Teile 41, 42 sind mittels eines Führungsstifts 57 zusammengehalten. Im ersten Teil befindet sich dazu ein Langloch 51, welches im Zusammenhang mit dem im zweiten Teil 42 integrierten Führungsstift 57 einen Verschiebebereich zwischen dem ersten Teil 41 und dem zweiten Teil 42 definiert. Ist der Kraftspeicher im Betätiger gespannt, drückt der Auslösehebel den Kraftspeicher zusammen und der Führungsstift 57 ist in der Nähe eines vorderen Anschlags 52v des Langlochs 51. Fig. 10 zeigt den Kraftspeicher in diesem gespannten Zustand. Wird der Auslösehebel 27 freigegeben, entspannt sich die erste Feder 43, bzw. sie drückt den Kraftspeicher auseinander, und der Führungsstift 57 wandert in Richtung eines hinteren Anschlags 52h im Langloch 51. Wird nun ein Betätiger ausgelöst, ohne dass beispielsweise eine Bremse angeschlossen ist, sei dies zu Test- oder Revisionszwecken, prallt der Führungsstift mit hoher Auslösegeschwindigkeit und Kraft in den Endanschlag, bzw. den hinteren Anschlag 52h. Das kann zur Zerstörung des Betätigers führen. Um dies zu vermeiden ist im ersten Teil 41 der Anschlagpuffer 53 integriert. Dazu beinhaltet der erste Teil 41 ein erstes Teilstück 44 und ein zweites Teilstück 48. Die beiden Teilstücke sind mittels eines elastischen Körpers, im Beispiel einer Federanordnung 54, zusammengepresst. Diese Zusammenpressung erfolgt mit einer Zusammenpresskraft, welche grösser als die Kraft der zusammengedrückten ersten Feder 43 ist. Prallt nun beim Entspannen der ersten Feder 43 der Führungsstift 57 an den hinteren Anschlag 52h des Langlochs 51 - siehe Fig. 9 und 11 - kann sich das erste Teilstück im Rahmen eines Federhubs L der Federanordnung 54 weiterbewegen und die Aufprallbelastung im Betätiger wird dadurch reduziert.

Das zweite Teilstück 48 beinhaltet im Ausführungsbeispiel ein zweites Führungsrohr 49, welches im zweiten Teil 42 gleitend gelagert und über den Führungsstift 57 gehalten ist. Der zweite Teil 42 ist über den hinteren Anschlusspunkt 36, vorzugsweise schwenkbar, im Betätiger 20 befestigt. Der zweite Teil 42 beinhaltet einen Aufnahmebereich für die erste Feder 43. Im Ausführungsbeispiel sind der Führungsstift 57 und der hintere Anschlusspunkt durch dasselbe Bauteil realisiert. Im zweiten Teilstück 48 befindet sich weiter ein Gewinde, im Beispiel in der Form einer Gewindeplatte 50, zum Anschluss des ersten Teilstücks 44.

Das erste Teilstück 44 beinhaltet ebenso ein erstes Führungsrohr 58, welches zum Anschluss an den Auslösehebel 27 vorgesehen ist und welches eine entsprechende Aufnahmezone 58a zur Aufnahme der Federkraft der Feder 43 aufweist. Die Aufnahmezone 58a und das erste Führungsrohr 58 können natürlich ein- oder mehrstückig ausgeführt sein. Das erste Teilstück 44 beinhaltet eine Prallplatte 47. Mit einer Spannschraube 55, sowie allfälligen Spannscheiben 56, wird die Prallplatte 47 über die Federanordnung 54, zum zweiten Teilstück 48 vorgespannt. Vorteilhafterweise wird eine Vorpannkraft der Federanordnung 54 mittels eines Federrohrs 46 eingestellt. Die Federanordnung 54 ist vorzugsweise in Form einer Säule aus Tellerfedern zusammengestellt.

Befindet sich der Betätiger in der betätigten Stellung wie in Fig. 6 dargestellt, kann der Betätiger mittels einer Rückstelleinrichtung 60 zurückgestellt werden. Die Rückstelleinrichtung 60 beinhaltet einen Rückführhebel 32. Der Rückführhebel 32 ist im Beispiel um den durch das Verbindungselement 26 bestimmten Drehpunkt verschwenkbar angeordnet. Der Rückführhebel 32 und der Auslösehebel 27 sind somit um denselben Drehpunkt schwenkbar angeordnet und sie können somit einem gleichen Schwenkradius R folgen. Auf dem Rückführhebel 32 ist die Halteeinrichtung 30 mit Elektromagnet 31 und Klinke 29 angeordnet. Der Rückführhebel 32 ist über einen Führungsbolzen 63 zu einem Rückführschlitten 65 verbunden, welcher mittels eines Spindelantriebs 64 vor- und zurückverfahren werden kann.

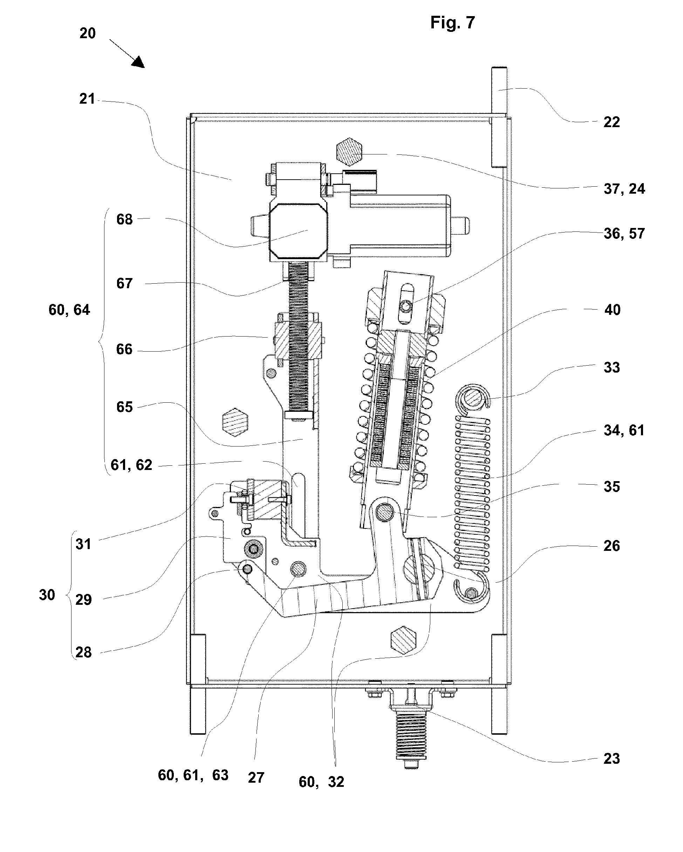

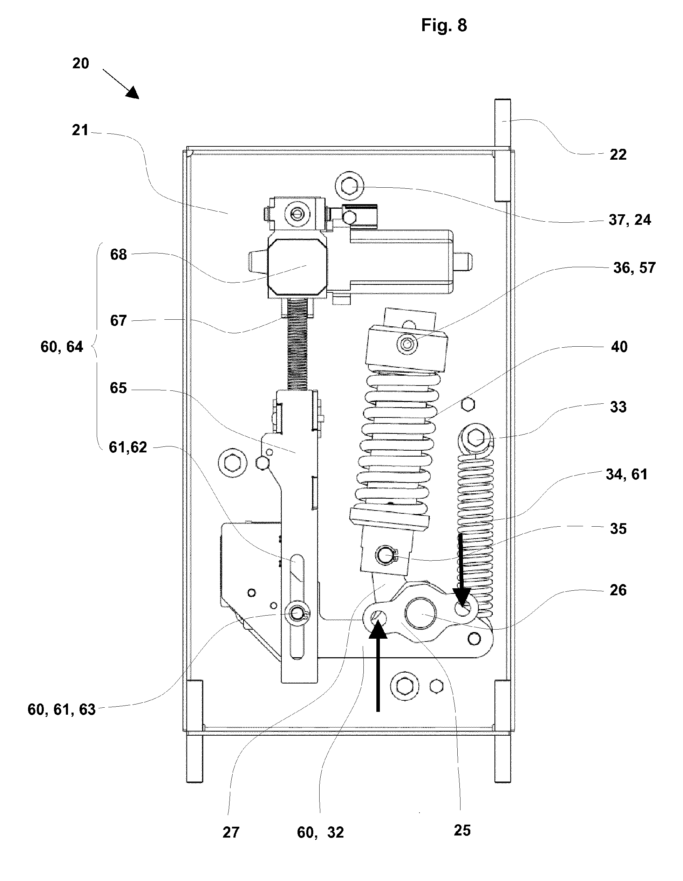

Der Spindelantrieb 64 beinhaltet einen Getriebemotor 68, welcher eine Rückführspindel 67 treiben kann. Im Rückführschlitten 65 ist eine Spindelmutter 66 angeordnet. Durch drehen der Rückführspindel 67 wird somit die Spindelmutter 66 und somit der Rückführschlitten 65 bewegt. Um die Rückstelleinrichtung 60 und die anschliessenden Teile vor einer Überbelastung zu schützen beinhaltet die Rückstelleinrichtung 60, bzw. der Betätiger 20, eine Rückstosssicherung 61. Im Rückführschlitten 65 befindet sich dazu ein Langloch 62 - siehe Fig. 7 und 8 -, welches einen Spielbereich zwischen Rückführschlitten 65 und Rückführhebel 32 mit Führungsbolzen 63 bestimmt. Eine Gegenfeder 34 zieht den Rückführhebel 32 gegen ein erstes Ende des durch das Langloch 62 bestimmten Spielbereichs. Die Gegenfeder 34 ist über einen auf dem Betätigerträger 21 angeordneten Gegenbolzen 33 gespannt.

Zum Zweck des Zurückstellens wird nun vorzugsweise der Elektromagnet 31 aktiviert und der Spindelantrieb 64 bewegt den Rückführhebel 32, zusammen mit der Halteeinrichtung 30, über den Schwenkradius R zum Auslösehebel 27, bzw. die Klinke 29 zum Verbindungspunkt 28. Der Rückführhebel 32 wird dabei durch die Gegenfeder 34 entsprechend gezogen. Sobald die Halteklinke 29 den Verbindungspunkt 28 erreicht, drückt der Verbindungspunkt 28 die Halteklinke 29 zurück und der Elektromagnet 31 kann die Klinke 29 haftend halten.

Durch Zurückfahren des Rückführschlittens kann nun der Betätiger in die in Fig. 5 gezeigte Betriebsstellung gespannt werden. Die Rückstelleinrichtung 60 ist genügend stark ausgelegt, um den Kraftspeicher 40 zu spannen. Die Verfahrwege des Rücklaufschlittens 65 sind natürlich über Schalter (nicht dargestellt) gesteuert.

Die Kombination des Langlochs 62 im Rückführschlitten zusammen mit der Gegenfeder 34 bildet nun die Rückstosssicherung 61 für den Betätiger 20. Es ist eine federbelastete Rückstosssicherung. Wird im Verlaufe des Zurückstellens eine äussere Rückstosskraft auf die Anschlusslasche 25 ausgeübt, kann der Auslösearm 27 über die Halteeinrichtung 60 den Rückführhebel 32 zurückdrücken, indem - siehe Fig. 8 - der Führungsbolzen 63 im Langloch 62 des Rückführschlittens 65, gegen die Kraft der Gegenfeder 34 verschoben wird. Dies ist damit erreicht, dass die Rückstosssicherung 61 ausgelegt ist um lediglich in eine Rückzugrichtung, also nur in Richtung einer Kraftwirklinie Kraft zu übertragen und in die andere Richtung ein Spiel zu ermöglichen. Der Spindelantrieb 64 und damit die Rückstelleinrichtung sind somit wirksam geschützt, da äussere Kräfte keine Überbelastung der Rückstelleinrichtung 60 bewirken können. Entsprechend sind auch anschliessende Teile und Hebel vor Überbelastung geschützt.

Die dargestellten Ausführungen können vom Fachmann variiert werden. Anstelle des Spindelantriebs kann beispielsweise auch eine pneumatische Einrichtung verwendet sein. Die Rückstosssicherung, welche im Beispiel mittels Langloch und Führungsbolzen zwischen Rückführhebel und Rücklaufschlitten angeordnet ist, könnte auch im Bereiche der Befestigung des Spindelantriebs im Betätigerträger sein.

In der vorliegenden Beschreibung sind der Kraftspeicher 40 und die Rückstosssicherung 61 gemeinsam im Betätiger 20 verwendet. Es ist aber auch möglich die beiden Gegenstände unabhängig zu verwenden und einzusetzen. Der durch den Anschlagpuffer geschützte Kraftspeicher kann für vielerlei Aufgaben verwendet werden, wo es darum geht einen Kraftspeicher vor Zerstörung zu schützen. Eine beste Wirkung wird jedoch durch die Verwendung beider Gegenstände erzielt, da damit ein Betätiger umfassend geschützt ist.

## Patentansprüche

1. Elektromechanischer Betätiger für den Anbau an eine Aufzugskabine (2) einer Aufzugsanlage (1) und geeignet zum Betätigen einer Bremse (13, 13') beinhaltend:
einen Kraftspeicher (40),
eine Halteeinrichtung (30),
eine Rückstelleinrichtung (60) und
mindestens ein Verbindungselement (26, 25) zum Verbinden des Betätigers (20) mit der Bremse (13,13'),
wobei die Rückstelleinrichtung (60) - über die Halteeinrichtung (30) - den Kraftspeicher (40) und das Verbindungselement (26, 25) in einer, einer Bereitschaftsstellung der Bremse (13, 13') entsprechenden ersten Betriebsposition hält und/oder in diese zurückführt,
wobei der Kraftspeicher (40) im Bedarfsfall, bei Freigabe der Halteeinrichtung (30), auf das Verbindungselement (26, 25) einwirkt um die Bremse (13, 13') zu Betätigen und in eine entsprechende Einrückstellung zu bringen,
**dadurch gekennzeichnet, dass**
die Rückstelleinrichtung (60) eine federbelastete Rückstosssicherung aufweist, so dass die Rückstelleinrichtung (60) von Rückstosskräften entlastet ist, wobei die Rückstelleinrichtung (60) über einen Rückführschlitten (65) zur Halteeinrichtung (30) verbunden ist und die Halteeinrichtung (30) mit einer Gegenfeder (34) verbunden ist, welche die Halteeinrichtung (30) in eine einer Kraftübertragungsrichtung der Rückstosssicherung (61) entsprechende Lage drückt und / oder
der Kraftspeicher (40) einen hinteren Anschlag (52h) beinhaltet und der Kraftspeicher (40) einen Anschlagpuffer (53) aufweist, so dass ein Kraftstoss beim Auftreffen des Kraftspeichers (40) in einer durch den hinteren Anschlag (52h) bestimmten Endposition reduziert ist.

2. Elektromechanischer Betätiger gemäss Anspruch 1, wobei die Rückstelleinrichtung (60), zum Zweck des Rückstellens und des Haltens des Betätigers (20) in der der Bereitschaftsstellung der Bremse (13, 13') entsprechenden ersten Betriebsposition, mittels der Rückstosssicherung (61) auf die Halteeinrichtung (30) einwirkt, wobei die Rückstosssicherung (61) ausgeführt ist um lediglich in eine Richtung eine Kraft zu übertragen.

3. Elektromechanischer Betätiger gemäss Anspruch 1 oder 2, wobei die Rückstosssicherung (61) ein Langloch (62) beinhaltet, welches mit einem in der Halteeinrichtung (30) integrierten Führungsbolzen (63) zusammenwirkt.

4. Elektromechanischer Betätiger gemäss Anspruch 3, wobei die Rückstelleinrichtung (60) einen Spindelantrieb (64) beinhaltet und eine Spindelmutter (66) im Rückführschlitten (65) angeordnet ist und mit einer von einem Getriebemotor (68) getriebenen Rückführspindel (67) zum Vor- und Rückbewegen des Rückführschlittens (65).

5. Elektromechanischer Betätiger gemäss Anspruch 3 oder 4, wobei die Gegenfeder (34) die Halteeinrichtung (30) mit dem Führungsbolzen (63) in die der Kraftübertragungsrichtung der Rückstosssicherung (61) entsprechende Lage drückt, wobei eine Kraftwirkung der Gegenfeder (34) im Vergleich zu einer Kraftwirkung des Kraftspeichers (40) klein ist.

6. Elektromechanischer Betätiger gemäss einem der Ansprüche 1 bis 5, wobei der Kraftspeicher (40) über einen Auslösehebel (27) auf das Verbindungselement (26) einwirkt, und dieser Auslösehebel (27) bei einem Verbindungspunkt (28) von einem an der Halteeinrichtung (30) angeordneten Elektro-Haftmagnet (31) in der Bereitschaftsstellung gehalten ist, und die Halteeinrichtung (30) auf einem Rückführhebel (32) angeordnet ist, wobei ein Drehpunkt des Rückführhebels (32) und ein Drehpunkt des Auslösehebels (27) auf einer gemeinsamen Achse angeordnet sind, so dass ein Schwenkradius (R) des Verbindungspunktes (28) des Auslösehebels (27) und eines Haltepunktes der Halteeinrichtung (30) gleich sind.

7. Elektromechanischer Betätiger gemäss Anspruch 6, wobei das Verbindungselement (26) über den Drehpunkt des Auslösehebels (27) führt und das Verbindungselement (26) eine Anschlusslasche (25) beinhaltet, welche zum Drehpunkt des Auslösehebels (27) verbunden ist.

8. Elektromechanischer Betätiger gemäss einem der Ansprüche 1 bis 7, wobei der Kraftspeicher (40) einen ersten Teil (41), einen zweiten Teil (42) und eine erste Feder (43) mit einer ersten Federspannkraft beinhaltet, wobei die Feder (43) zwischen dem ersten und dem zweiten Teil (41, 42) gespannt ist,
wobei der erste Teil (41) und der zweite Teil (42) zueinander über einen Verschiebebereich (51) verschiebbar sind und der Verschiebebereich durch mindestens einen vorderen Anschlag (52v) oder den hinteren Anschlag (52h) begrenzt ist und dieser zumindest eine Anschlag (52v, 52h) zur Sicherstellung einer minimalen ersten Federspannkraft verwendet ist,
wobei der Aufschlagspuffer (53) im ersten oder im zweiten Teil (41, 42) integriert ist, wobei dieser erste oder zweite Teil (41, 42) ein erstes Teilstück (44) und ein zweites Teilstück (48) beinhaltet und der Anschlagpuffer (53) das erste Teilstück (44) mit dem zweiten Teilstück (48) verbindet.

9. Elektromechanischer Betätiger gemäss Anspruch 8, wobei der Anschlagpuffer (53) eine Federanordnung (54) mit einer zweiten Federspannkraft beinhaltet, welche das erste Teilstück (44) mit dem zweiten Teilstück (48) verbindet und diese zusammenhält wobei die zweite Federspannkraft auf einen Wert grösser als die erste Federspannkraft eingestellt ist.

10. Elektromechanischer Betätiger gemäss Anspruch 9, wobei eines der beiden ersten oder zweiten Teilstücke (44, 48) eine Gewindeplatte (50) beinhaltet und das andere der beiden Teilstücke (48, 44) eine Prallplatte (47) beinhaltet und die Federanordnung (54) mittels einer Spannschraube (55) die Prallplatte (47) zur Gewindeplatte (50) spannt.

11. Elektromechanischer Betätiger gemäss einem der Ansprüche 8 bis 10, wobei der erste Teil (41), vorzugsweise über einen Auslösehebel (27), zum Verbindungselement (26) verbunden ist und der zweite Teil (42) zu einem Gehäuse des Betätigers oder einem Betätigerträger (21) verbunden ist, wobei der zweite Teil (42) eine Führung für den ersten Teil (41) beinhaltet, so dass der erste Teil (41) geführt im zweiten Teil (42) verschiebbar ist.

12. Elektromechanischer Betätiger gemäss einem der Ansprüche 8 bis 11, wobei der erste Teil (41) ein weiteres Langloch (51) beinhaltet, welches mit einem Führungsstift (57) des zweiten Teils (42) zusammenwirkt und den vorderen und hinteren Anschlag (52v, 52h) bestimmt, welche Anschläge den Verschiebebereich definieren.

13. Elektromechanischer Betätiger gemäss einem der Ansprüche 8 bis 12, wobei der erste und der zweite Teil (41, 42) schwenkbar, vorzugsweise über einen Auslösehebel (27), zum Verbindungselement (26) oder zum Betätigerträger (21) verbunden sind.

14. Aufzugsanlage mit einer Aufzugskabine (2) oder mit einem Gegengewicht (3), welche Aufzugskabine (2) oder Gegengewicht (3) Bremsen (13, 13') und mindestens einen elektromechanischen Betätiger (20) gemäss einem der Ansprüche 1 bis 13 beinhaltet.

## Claims

1. Electromechanical actuator for attachment to a lift cage (2) of a lift installation (1) and suitable for actuating a brake (13, 13'), comprising:
an energy store (40),
a retaining device (30),
a resetting device (60) and
at least one connecting element (26, 25) for connecting the actuator (20) with the brake (13, 13'),
wherein the resetting device (60) by way of the retaining device (30) retains the energy store (40) and the connecting element (26, 25) in a first operating position corresponding with a readiness setting of the brake (13, 13') and/or returns it to this position,
wherein the energy store (40) when required and on release of the retaining device (30) acts on the connecting element (26, 25) in order to actuate the brake (13, 13') and to bring it into a corresponding applied setting,
**characterised in that**
the resetting device (60) comprises spring-loaded recoil prevention means so that the resetting device (60) is relieved of recoil forces, wherein the resetting device (60) is connected with the retaining device (30) by way of a return carriage (65) and the retaining device (30) is connected with a counterspring (34) which urges the retaining device (30) into a position corresponding with a force transmission direction of the recoil prevention means (61)
and/or
the energy store (40) includes a rear abutment (52h) and the energy store (40) has an impact buffer (53) so that recoil when the energy store (40) impinges in an end position determined by the rear abutment (52h) is reduced.

2. Electromechanical actuator according to claim 1, wherein the resetting device (60) for the purpose of resetting and retaining the actuator (20) in the first operating position corresponding with the readiness setting of the brake (13, 13') acts on the retaining device (30) by means of the recoil prevention means (61), wherein the recoil prevention means (61) is constructed to transmit a force merely in one direction.

3. Electromechanical actuator according to claim 1 or 2, wherein the recoil prevention means (61) includes a slot (62) co-operating with a guide pin (63) integrated in the retaining device (30).

4. Electromechanical actuator according to claim 3, wherein the resetting device (60) includes a spindle drive (64) and a spindle nut (66) is arranged in the return carriage (65), and with a return spindle (67), which is driven by a geared motor (68), for forward and backward movement of the return carriage (65).

5. Electromechanical actuator according to claim 3 or 4, wherein the counterspring (34) urges the retaining device (30) together with the guide pin (63) into the position corresponding with the force transmission direction of the recoil prevent means (61), wherein the force action of the counterspring (34) is small by comparison with the force action of the energy store (40).

6. Electromechanical actuator according to any one of claims 1 to 5, wherein the energy store (40) acts on the connecting element (26) by way of a trigger lever (27) and this trigger lever (27) is held in a readiness setting at a connecting point (28) of a retaining electromagnet (31) arranged at the retaining device (30), and the retaining device (30) is arranged on a return lever (32), wherein a fulcrum of the return lever (32) and a fulcrum of the trigger lever (27) are arranged on a common axis so that a pivot radius (R) of the connecting point (28) of the trigger lever (27) and a retaining point of the retaining device (30) are the same.

7. Electromechanical actuator according to claim 6, wherein the connecting element (26) is guided by way of the fulcrum of the trigger lever (27) and the connecting element (26) includes a connecting strap (25) connected with the fulcrum of the trigger lever (27).

8. Electromechanical actuator according to any one of claims 1 to 7, wherein the energy store (40) includes a first part (41), a second part (42) and a first spring (43) with a first spring tensioning force, wherein the spring (43) is tensioned between the first and second parts (41, 42), wherein the first part (41) and the second part (42) are displaceable relative to one another over a displacement range (51) and the displacement range is bounded by at least one front abutment (52v) or the rear abutment (52h) and this at least one abutment (52v, 52h) is used for ensuring a minimum first spring tensioning force, wherein the impact buffer (53) is integrated in the first or second part (41, 42), wherein this first or second part (41, 42) includes a first sub-member (44) and a second sub-member (48) and the impact buffer (53) connects the first sub-member (44) with the second sub-member (48).

9. Electromechanical actuator according to claim 8, wherein the impact buffer (53) includes a spring arrangement (54) with a second spring tensioning force, which connects the first sub-member (44) with the second sub-member (48) and holds these together, wherein the second spring tensioning force is set to a greater value than the first spring tensioning force.

10. Electromechanical actuator according to claim 9, wherein one of the two first and second sub-members (44, 48) includes a threaded plate (50) and the other one of the two sub-members (48, 44) includes an impact plate (47) and the spring arrangement (54) tightens the impact plate (47) relative to the threaded plate (50) by means of a draw screw (55).

11. Electromechanical actuator according to any one of claims 8 to 10, wherein the first part (41) is connected with the connecting element (26), preferably by way of a trigger lever (27), and the second part (42) is connected with a housing of the actuator or an actuator support (21), wherein the second part (42) includes a guide for the first part (41) so that the first part (41) is guided in the second part (42) to be displaceable.

12. Electromechanical actuator according to any one of claims 8 to 11, wherein the first part (41) includes a further slot (51), which co-operates with a guide pin (57) of the second part (42) and which determines the front and rear abutments (52v, 52h), which abutments define the displacement range.

13. Electromechanical actuator according to any one of claims 8 to 12, wherein the first and second parts (41, 42) are pivotably connected, preferably by way of a trigger lever (27), with the connecting element (26) or with the actuator support (21).

14. Lift installation with a lift cage (2) or with a counterweight (3), which lift cage (2) or counterweight (3) includes brakes (13, 13') and at least one electromechanical actuator (20) according to any one of claims 1 to 13.

## Revendications

1. Actionneur électromécanique à monter sur une cabine d'ascenseur (2) d'une installation d'ascenseur (1) et apte à actionner un frein (13, 13'), contenant :
un accumulateur d'énergie (40),
un dispositif de retenue (30),
un dispositif de rappel (60) et
au moins un élément de liaison (26, 25) pour relier l'actionneur (20) au frein (13, 13'),
étant précisé que le dispositif de rappel (60) maintient l'accumulateur d'énergie (40) et l'élément de liaison (26, 25)- de préférence par l'intermédiaire du dispositif de retenue (30) - dans une première position de fonctionnement correspondant à une position d'attente du frein (13, 13)') et/ou les ramène dans cette position,
que l'accumulateur d'énergie (40) agit en cas de besoin sur l'élément de liaison (26, 25), lors du déblocage du dispositif de retenue (30), pour actionner le frein (13, 13') et l'amener dans une position d'enclenchement correspondante,
**caractérisé en ce que** le dispositif de rappel (60) comporte une protection antirecul contrainte par ressort, de sorte que le dispositif de rappel (60) est déchargé des forces de recul, étant précisé que le dispositif de rappel (60) est relié par l'intermédiaire d'un coulisseau de retour (65) au dispositif de retenue (30) et que le dispositif de retenue (30) est relié à un contre-ressort (34) qui le pousse dans une position correspondant à un sens de transmission de force de la protection antirecul (61), et/ou
l'accumulateur d'énergie (40) contient une butée arrière (52h) et comporte un tampon de butée (53), de sorte qu'un choc lors de l'arrivée de l'accumulateur d'énergie (40) dans une position de fin de course définie par la butée arrière (52h) est réduit.

2. Actionneur électromécanique selon la revendication 1, étant précisé que le dispositif de rappel (60), pour le rappel et le maintien de l'actionneur (20) dans la première position correspondant à la position d'attente du frein (13, 13'), agit à l'aide de la protection antirecul (61) sur le dispositif de retenue (30), étant précisé que la protection antirecul (61) est conçue pour ne transmettre une force que dans un sens.

3. Actionneur électromécanique selon la revendication 1 ou 2, étant précisé que la protection antirecul (61) comporte un trou oblong (62) qui coopère avec un axe de guidage (63) intégré dans le dispositif de retenue (30).

4. Actionneur électromécanique selon la revendication 3, étant précisé que le dispositif de rappel (60) contient un entraînement à broche (64), et un écrou de broche (66) est disposé dans le coulisseau de retour (65), et avec une broche de retour (67) entraînée par un motoréducteur (68), pour le mouvement de va-et-vient du coulisseau (65).

5. Actionneur électromécanique selon la revendication 3 ou 4, étant précisé que le contre-ressort (34) pousse le dispositif de retenue (30) avec l'axe de guidage (63) dans la position correspondant au sens de transmission de force de la protection antirecul (61), étant précisé qu'une action du contre-ressort (34) est faible comparée à l'action de l'accumulateur d'énergie (40).

6. Actionneur électromécanique selon l'une des revendications 1 à 5, étant précisé que l'accumulateur d'énergie (40) agit par l'intermédiaire d'un levier de déclenchement (27) sur l'élément de liaison (26), et que ce levier de déclenchement (27) est maintenu dans la position d'attente, au niveau d'un point de liaison (28), par un électroaimant (31) disposé sur le dispositif de retenue (30), et que le dispositif de retenue (30) est disposé sur un levier de retour (32), étant précisé qu'un pivot du levier de retour (32) et un pivot du levier de déclenchement (27) sont disposés sur un axe commun, de sorte qu'un rayon de pivotement (R) du point de liaison (28) du levier de déclenchement (27) est égal à celui d'un point de retenue du dispositif de retenue (30).

7. Actionneur électromécanique selon la revendication 6, étant précisé que l'élément de liaison (26) passe par le pivot du levier de déclenchement (27) et que l'élément de liaison (26) contient une patte de raccordement (25) qui est reliée au pivot du levier de déclenchement (27).

8. Actionneur électromécanique selon l'une des revendications 1 à 7, étant précisé que l'accumulateur d'énergie (40) contient une première partie (41), une deuxième partie (42) et un premier ressort (43) avec une première force de tension de ressort, étant précisé que le ressort (43) est tendu entre les première et deuxième parties (41, 42),
que la première partie (41) et la deuxième partie (42) sont aptes à coulisser l'une par rapport à l'autre sur une zone de coulissement (51) et que ladite zone de coulissement est limitée par au moins une butée avant (52v) ou la butée arrière (52h), et que ladite butée (52v, 52h) est utilisée pour assurer une première force de tension de ressort minimale,
que le tampon de butée (53) est intégré dans la première ou la deuxième partie (41, 42), cette première ou deuxième partie (41, 42) contenant un premier élément (44) et un deuxième élément (48), et le tampon de butée (53) reliant le premier élément (44) au deuxième élément (48).

9. Actionneur électromécanique selon la revendication 8, étant précisé que le tampon de butée (53) contient un dispositif à ressort (54) avec une deuxième force de tension de ressort, qui relie le premier élément (44) au deuxième élément (48) et les maintient réunis, étant précisé que la deuxième force de tension de ressort est réglée à une valeur plus grande que la première force de tension de ressort.

10. Actionneur électromécanique selon la revendication 9, étant précisé que l'un des deux premier et deuxième éléments (44, 48) contient une plaque filetée (50) tandis que l'autre contient une plaque de collision (47), et que le dispositif à ressort (54) serre la plaque de collision (47) par rapport à la plaque filetée (50) à l'aide d'une vis de serrage (55).

11. Actionneur électromécanique selon l'une des revendications 8 à 10, étant précisé que la première partie (41) est reliée, de préférence par l'intermédiaire d'un levier de déclenchement (27), à l'élément de liaison (26) tandis que la deuxième partie (42) est reliée à un carter de l'actionneur ou à un support d'actionneur (21), et que la deuxième partie (42) contient un guide pour la première partie (41), de sorte que la première partie (41) est apte à coulisser de manière guidée dans la deuxième partie (42).

12. Actionneur électromécanique selon l'une des revendications 8 à 10, étant précisé que la première partie (41) contient un autre trou oblong (51) qui coopère avec une tige de guidage (57) de la deuxième partie (42) et qui définit les butées avant et arrière (52v, 52h) qui définissent la zone de coulissement.

13. Actionneur électromécanique selon l'une des revendications 8 à 12, étant précisé que les première et deuxième parties (41, 42) sont reliées pivotantes, de préférence par l'intermédiaire d'un levier de déclenchement (27), à l'élément de liaison (26) ou au support d'actionneur (21).

14. Installation d'ascenseur avec une cabine d'ascenseur (2) ou un contrepoids (3), laquelle cabine (2) ou lequel contrepoids (3) comporte des freins (13, 13') et au moins un actionneur électromécanique (20) selon l'une des revendications 1 à 13.
